# EUROPEAN PATENT SPECIFICATION

(11) **EP 2 748 017 B1**
(45) Date of publication and mention of the grant of the patent: **07.03.2018**
(21) Application number: 12772512.5
(22) Date of filing: 14.09.2012
(51) Int. Cl.: B60C 11/03, B60C 11/12

(54) **WINTER TYRE**
LUFTREIFEN
PNEUMATIQUE

(30) Priority: 21.09.2011 IT MI20111702; 18.10.2011 US 201161548600 P
(43) Date of publication of application: 02.07.2014
(73) Proprietor: Pirelli Tyre S.p.A., 20126 Milano (IT)
(72) Inventor: COLOMBO, Gianfranco, I-20126 Milan (IT); BOLZONI, Roberto, I-20126 Milan (IT); LIESCH, Werner, 64747 Breuberg (DE)
(74) Representative: Lasca, Sergio
(86) International application number: PCT/IB2012/054798
(87) International publication number: WO 2013/042023

(56) References cited:
- EP-A1- 1 531 064
- EP-A1- 1 630 007
- EP-A2- 1 070 606
- JP-A- 2000 326 707
- JP-A- 2009 090 874
- US-A1- 2011 114 237

## Description

### FIELD OF THE INVENTION

The present invention relates to a tyre for vehicle wheels, more particularly to a winter tyre, in particular suitable for driving on snow and ice and having a good handling performance on a wet and dry road surface.

### BACKGROUND

The following documents describe some examples of winter tyres: EP 485883, US 5435366, WO 02/068221, WO 02/68222, WO 2004/056588, WO 2008/074353.

Documents JP 2000 326707, JP 2009 090874, EP 1 630 007, EP 1 531 064, EP 1 070 606 and US 2011/0114237 A1 describe examples of tyres comprising tread portions provided with sipes.

### SUMMARY OF THE INVENTION

A winter tyre is expected to have good traction when used on a snow-covered and/or icy surface as well as a good handling performance on wet or dry road surfaces. In order to increase the grip and/or the traction on a snow-covered surface, the treads of winter tyres are typically provided with a series of thin sipes.

Recently, motor-vehicle manufacturers have introduced onto the market vehicles designed on the basis of new concepts. For example in the sector of SUVs (Sport Utility Vehicles), four-wheel drive vehicles, typically used only for rough terrain and generally noisy and relatively rigid, have been converted into vehicles with better comfort and performance features, intended for use by a particularly discerning clientele. These vehicles are typically bigger, more powerful and heavier than berline cars or station wagons and often require tyres with a greater section width. Moreover, also in the sector of HP/UHP (High Performance/Ultra High Performance) berline cars or station wagons there has been a gradual increase in the section width of the tyres used, typically associated with a particularly low height of the sidewall.

For example, tyres for berline cars and/or station wagons may have a nominal section width of 225, 235, 245 or more; tyres for SUVs may have a nominal section width of 275, 295 or more.

The use of wide tyres provides vehicles with a sporty appearance and behaviour and also increases significantly the travel safety on a dry surface, in particular when travelling around bends at high speed.

The Applicant has however verified that the larger section width of the tyres constitutes a drawback when travelling on a snow-covered and/or icy surface. In particular, the Applicant has established that the performance in terms of grip, traction and braking on a snow-covered and/or icy surface may worsen very significantly with an increase in the section width of the tyre.

The Applicant believes that this depends on the fact that, for the same weight acting on the tyre and for the same pressure conditions, a greater section width of the tyres corresponds to a smaller length of the footprint area (or a smaller dimension in the longitudinal direction). This is because a greater section width of the tyre typically corresponds to a greater width of the tread, such that the pressure is distributed over a footprint area which is bigger in the axial direction (or in the widthwise direction) and smaller (or "shorter") in the longitudinal direction. The smaller footprint area in the longitudinal direction corresponds to a smaller number of longitudinally aligned blocks and/or transverse sipes present inside the footprint area itself and consequently a reduction in the performance in terms of grip, traction and/or braking.

The Applicant has considered the problem of providing a tread pattern which is able to provide winter tyres with an excellent performance both during travel on a snow-covered and/or icy surface and during travel on a dry and/or wet surface, also (but not exclusively) in the case where these tyres have a large section width.

The Applicant has found that such a combination of mutually opposing characteristics may be advantageously obtained by means of a tread pattern comprising two particularly wide, longitudinal grooves so as to create in a footprint area working zones of the tread band - a central zone and two shoulder zones - which are substantially independent of each other, wherein the central zone occupies a substantial part of the tread band and comprises a plurality of circumferentially consecutive blocks provided with sipes arranged in an oblique direction with respect to the equatorial plane of the tyre and wherein the inclination of the sipes formed in circumferentially adjacent blocks alternates in the circumferential direction, forming one or more sequences of inclined and counter-inclined sipes.

In particular, the Applicant has found that, by means of the formation of inclined and counter-inclined sipes in the blocks present in the broad central zone, it is possible to obtain an excellent performance in terms of grip, traction and braking during travel on snow-covered and/or icy surfaces and during travel along straight sections and travel around bends.

According to a general aspect, the present invention relates to a tyre, and in particular a winter tyre, having a tread band in which a tread pattern is defined.

According to its preferred aspects, the invention has one or more of the characteristic features indicated below.

Preferably the tyre has a nominal section width of at least about 225, more preferably of at least about 245.

"Nominal section width" is understood as meaning the maximum width (in mm) of the cross-section of the tyre, in accordance with that indicated by the ETRTO standards. The maximum width typically is located on the sidewalls of the tyre.

The tread pattern formed on the tread band of the tyre may comprise two substantially circumferential grooves with a width of at least about 8 mm, more preferably of at least about 10 mm.

The two circumferential grooves define on the tread band a first and a second shoulder region and a central region extending across the equatorial plane of the tyre.

The central region of the tread band may have a width equal to at least about 30% of an effective width of the tread band.

In preferred embodiments, the central region of the tread band may have a maximum width equal to about 50% of the effective width of the tread band.

"Effective width" of the tread band is understood as meaning the width of the radially outermost portion of the tread band, namely the portion of the tread band intended to make contact with the ground. Typically, this effective width may be defined on a cross-section of the tyre, and/or on its tread band, as the distance between the axially outermost points of the radially outermost portion of the tread band. If applicable, these points may be defined by means of the intersection of extensions in a substantially axial direction of the radially outermost portion of the tread band and extensions in a substantially radial direction of the axially outermost portions of the tread band, should the tread band not have well defined edges and/or have rounded edges.

The tread pattern may comprise a plurality of transverse grooves.

The transverse grooves define, together with the substantially circumferential grooves, a plurality of blocks in the central region.

The transverse grooves define moreover a plurality of blocks in the first and in the second shoulder region.

In particular, the transverse grooves define, in the central region of the tread band, at least one block module which is substantially repeated in succession along the circumferential direction. The at least one module may comprise at least two blocks. In preferred embodiments, a succession of a first module and a second module substantially identical to the first module and overturned by 180° so as to form substantially a mirror image of the first module is repeated substantially along the circumferential direction.

The transverse grooves may have an oblique inclination relative to a circumferential direction in the central region of the tread band.

In preferred embodiments, the transverse grooves have, in the first and in the second shoulder region, a greater inclination (in terms of absolute value) than the inclination of the transverse grooves in the central region of the tread band.

In preferred embodiments, at least some of the transverse grooves in the central region of the tread band have a substantially U-shaped or V-shaped form.

A first plurality of sipes is formed in the blocks in the central region of the tread band.

The sipes of the first plurality of sipes may have an average inclination which is oblique relative to a circumferential direction.

More particularly, the average inclination of the sipes of the first plurality of sipes alternates in the circumferential direction so as to form at least one sequence of inclined and counter-inclined sipes formed in at least some of the circumferentially adjacent blocks of the central region.

In preferred embodiments, at least some of the transverse grooves in the central region of the tread band are counter-inclined with respect to the sipes of the first plurality of sipes formed in blocks adjacent to these transverse grooves.

The tyre according to the invention is preferably of the directional type, namely the tread pattern preferably defines a preferential rolling direction for said tyre. This rolling direction is typically indicated on the sidewall of the tyre by means of an arrow or similar symbol.

The tread pattern may also comprise a second plurality of sipes which are formed in the first shoulder region of the tread band. The tread pattern may also comprise a third plurality of sipes which are formed in the second shoulder region of the tread band.

Preferably, the sipes of the second plurality of sipes and the sipes of the third plurality of sipes have average inclinations opposite to each other. In this embodiment, the meeting of the extensions towards the central region of the tread band of the average inclinations of the sipes of the second plurality and third plurality of sipes thus defines a "pointing arrow". This pointing arrow is preferably directed in the opposite direction to the preferential rolling direction of the tyre.

In some embodiments, the sipes of the first plurality of sipes, and/or of the second plurality of sipes, and/or of the third plurality of sipes have a substantially zig-zag course.

More particularly, the course of the sipes of the first plurality of sipes (formed in the blocks of the central region of the tread band of the tyre) may preferably comprise a succession of first segments directed substantially in a circumferential direction and second segments directed substantially in the axial direction. The Applicant has obtained excellent results in terms of traction on a snow-covered surface with this configuration of sipes.

The central region of the tread band may also comprise blocks which are arranged in side-by-side relationship in the transverse direction. The sipes of the first plurality of sipes formed in at least some of these blocks arranged in side-by-side relationship in the transverse direction may preferably be counter-inclined with respect to each other.

In the present description the term "equatorial plane" indicates the plane perpendicular to the axis of rotation of the tyre and passing through the centre of its tread: the term "groove" indicates an elongated empty area in a tread which may extend circumferentially or transversely; the term "sipe" indicates a thin incision (with a width preferably less than 2 mm, even more preferably less than 1.5 mm) formed in a tread.

If not otherwise indicated, each angle - used to indicate the inclination of a given element of the tread pattern - is understood as being calculated as the angle defined between the equatorial plane of the tyre (or a plane parallel thereto) and the plane to which said element of the tread pattern belongs.

If not otherwise indicated, "average inclination" of a given element of the tread band is understood as meaning an average of the inclinations of the segments which form this element.

### BRIEF DESCRIPTION OF THE DRAWINGS

Further characteristic features and advantages of the invention will emerge more clearly from the following description of a number of preferred embodiments thereof, provided hereinbelow by way of a non-limiting example, with reference to the accompanying figures: In these drawings:
- Figures 1 a and 1b show, respectively, a cross-sectional view and a plan view of the tread of a tyre according to a first embodiment of the present invention;
- Figure 2 shows a plan view of the tread of a tyre according to a second embodiment of the present invention;
- Figure 3 shows a plan view of the tread of a tyre according to a third embodiment of the present invention;
- Figure 4 shows a plan view of the tread of a tyre according to a fourth embodiment of the present invention.

### DETAILED DESCRIPTION OF SOME EXAMPLES OF THE INVENTION

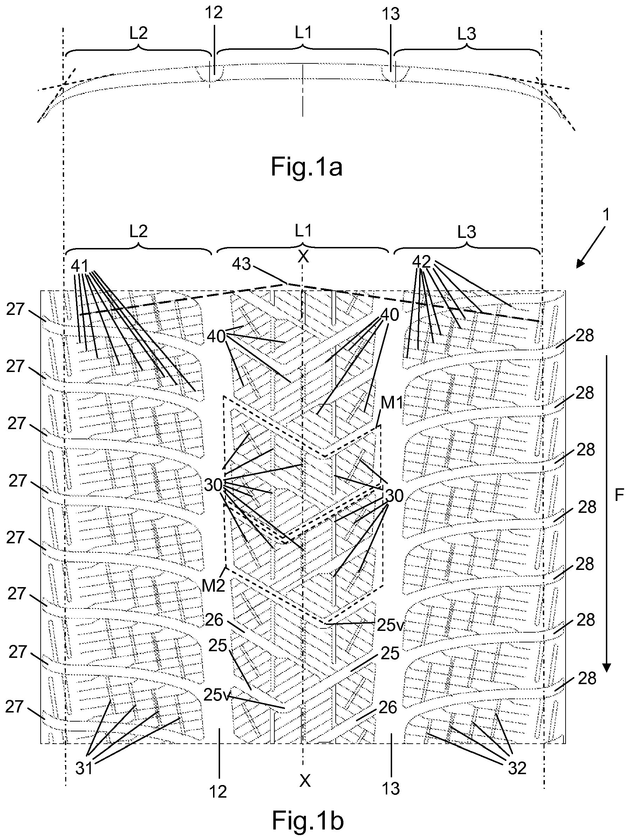

Figures 1 a and 1b show, respectively, a cross-sectional view and a plan view of the tread 1 of a tyre according to a first embodiment of the present invention.

Preferably, although not necessarily, the tyre according to the invention has a nominal section width of at least about 225, more preferably of at least about 245. For example, the tyre may have nominal section width of 225, 245, 275, 295. In any case, the Applicant has obtained excellent results also in the case of nominal section widths which are smaller (for example 185 or 195).

Preferably, the tyre according to the invention has a low section height. For example, the section height may be less than or equal to 60%, more preferably less than or equal to 50% of the nominal section width.

Preferably, although not necessarily, the tyre according to the invention is of the directional type, namely the tread pattern preferably defines a preferential rolling direction for said tyre. This rolling direction is indicated by means of an arrow F in Figure 1 b.

The pattern formed in the tread 1 comprises two substantially circumferential grooves 12 and 13. The circumferential grooves 12 and 13 separate a central region L1 of the tread from two shoulder regions L2 and L3 of the tread, arranged on the left and right of the central region L1, respectively. The central region L1 extends across the equatorial plane X-X of the tyre. The shoulder regions L2 and L3 extend in the vicinity of the axial ends of the tread 1. Although they are not represented by clearly recognizable edges, the ends of the tread 1 may be defined by means of the intersection of extensions, in the substantially axial direction, of the radially outermost portion of the tread 1 and extensions, in the substantially radial direction, of the axially outermost portions of the tread 1, as shown in Figure 1 a.

The circumferential grooves 12, 13 have a width of at least about 8 mm, more preferably of at least about 10 mm. Preferably, the width of the circumferential grooves 12, 13 is not greater than 18 mm.

Owing to the significant width of the circumferential grooves 12, 13, it is possible to separate fairly clearly the central region L1 from the shoulder regions L2, L3 such that it may be assumed that they act substantially independently from each other during rolling of the tyre, in particular during travel on a snow-covered and/or icy surface.

The central region L1 occupies a substantial part of the tread band 1. It may have a width equal to about 30-50% of the effective width of the tread band 1, namely the width of the zone of the tread band 1 intended to make contact with the ground. This zone is substantially defined in Figures 1a and 1b by means of the two dot-dash lines passing through the axial ends of the tread band 1 itself.

The central region L1 of the tread band 1 has preferably a width greater than the width of each of the shoulder regions L2 and L3.

The tread band 1 comprises a plurality of first transverse grooves 25 disposed in the central region L1. In the embodiment shown in Figure 1b the first asymmetrical transverse grooves 25 have a substantially U-shaped or V-shaped form. The first transverse grooves 25 extend substantially over the entire width of the central region L1 of the tread band 1. In other words, the first asymmetrical transverse grooves 25 may emerge inside the circumferential grooves 12 and 13.

In the embodiment shown in Figure 1b the first transverse grooves 25 form substantially a vertex 25v, the position of which is offset with respect to the equatorial plane X-X. Moreover, in consecutive transverse grooves 25, the position of the vertex 25v alternates on opposite sides of the equatorial plane X-X.

Preferably, the transverse grooves 25 have a width smaller than the width of the circumferential grooves 12, 13.

Preferably, the first transverse grooves 25 may have a width of at least about 4-5 mm. Preferably, the first transverse grooves 25 may have a maximum width of about 7-8 mm.

The first transverse grooves 25 may be formed by substantially straight segments. The first transverse grooves 25 may have segments with an oblique inclination relative to a circumferential direction.

Preferably, the first transverse grooves 25 may have an inclination of at least about 60°. Preferably, the first transverse grooves 25 may have a maximum inclination of about 85°.

The tread band 1 also comprises a plurality of second transverse grooves 26 arranged in the central region L1. The second transverse grooves 26 are arranged between the first transverse grooves 25. They may be for example arranged between pairs of first transverse grooves 25.

The second transverse grooves 26 may emerge inside the first transverse grooves 25. In the embodiment shown in Figure 1b, the second transverse grooves 26 have a width variable along their course and in particular have a smaller width in the vicinity of the point where they meet with the first transverse grooves 25.

Preferably, the second transverse grooves 26 have a width smaller than the width of the circumferential grooves 12, 13.

Preferably, the second transverse grooves 26 may have a width of at least about 4-5 mm. Preferably, the second transverse grooves 26 may have a maximum width of about 7-8 mm.

The second transverse grooves 26 may be formed by substantially straight segments. The second transverse grooves 26 may have an oblique inclination relative to a circumferential direction.

Preferably, the second transverse grooves 26 may have an inclination of at least about 60°. Preferably, the second transverse grooves 26 may have a maximum inclination of about 85°.

In preferred embodiments, such as that for example shown in Figure 1b, the second transverse grooves 26 may be arranged at least partially along a length of the first transverse grooves 25.

The first and/or the second transverse grooves 25, 26 define, together with the substantially circumferential grooves 12, 13, a plurality of blocks in the central region L1.

In particular, the first and/or the second transverse grooves 25, 26 define preferably, in the central region L1 of the tread band 1, at least one block module which is substantially repeated in succession along the circumferential direction. The at least one module may preferably comprise at least two blocks. In the embodiment shown in Figure 1b, a succession of a first module M1 and a second module M2 substantially identical to the first module M1 and overturned by 180° (about an axis extending along the circumferential direction, so as to form substantially a mirror image of the first module M1) is repeated substantially along the circumferential direction. The modules M1 and M2 are indicated by means of polygons shown in broken lines in Figure 1 b.

The tread band 1 also comprises a plurality of third transverse grooves 27 arranged in the first shoulder region L2.

The third transverse grooves 27 define a plurality of blocks in the first shoulder region L2.

Preferably, the third transverse grooves 27 have a width smaller than the width of the circumferential grooves 12, 13.

Preferably, the third transverse grooves 27 may have a width of at least about 4-5 mm. Preferably, the third transverse grooves 27 may have a maximum width of about 7-8 mm.

The third transverse grooves 27 may have an oblique inclination relative to a circumferential direction.

Preferably, the third transverse grooves 27 may have an inclination of at least about 75°. Preferably, the third transverse grooves 27 may have a maximum inclination of about 90°.

The tread band 1 also comprises a plurality of fourth transverse grooves 28 arranged in the second shoulder region L3.

The fourth transverse grooves 28 define a plurality of blocks in the second shoulder region L3.

Preferably, the fourth transverse grooves 28 have a width smaller than the width of the circumferential grooves 12, 13.

Preferably, the fourth transverse grooves 28 may have a width of at least about 4-5 mm. Preferably, the fourth transverse grooves 28 may have a maximum width of about 7-8 mm.

The fourth transverse grooves 28 may have an oblique inclination relative to a circumferential direction.

Preferably, the fourth transverse grooves 28 may have an inclination of at least about 75°. Preferably, the fourth transverse grooves 28 may have a maximum inclination of about 90°.

In preferred embodiments, the third and/or the fourth transverse grooves 27, 28 disposed in the first and/or in the second shoulder region L2, L3 have a greater inclination (in terms of absolute value) than the inclination of the first and/or the second transverse grooves 25, 26 disposed in the central region L1 of the tread band 1.

In preferred embodiments, the third and/or the fourth transverse grooves 27, 28 emerge inside the circumferential grooves 12, 13. Preferably, the zones where the third and/or the fourth transverse grooves 27, 28 meet with the circumferential grooves 12, 13 are circumferentially offset with respect to the zones where the first and/or the second transverse grooves 25, 26 meet with the same circumferential grooves 12, 13. In other words, the first and/or the second transverse grooves 25, 26 disposed in the central region L1 of the tread band 1 are preferably not aligned with the third and/or the fourth transverse grooves 27, 28 disposed in the first and in the second shoulder region L2, L3.

Preferably, the first and/or the second and/or the third and/or the fourth transverse grooves 25, 26, 27 and 28 have a width smaller than the width of the circumferential grooves 12, 13.

The blocks formed in the central region L1 of the tread band 1 may be interrupted and/or intersected by secondary grooves 30 which may be disposed in a substantially circumferential and/or oblique direction. These further secondary grooves 30 may completely intersect a block, so as to divide it into several blocks. Alternatively and/or in combination, these secondary grooves 30 may be interrupted inside a block, dividing it up therefore into portions which are connected together.

The blocks formed in the first shoulder region L2 of the tread band 1 may be interrupted and/or intersected by further secondary grooves 31 which may be disposed in a substantially circumferential and/or oblique direction. These further secondary grooves 31 may completely intersect a block, so as to divide it into several blocks. Alternatively and/or in combination, these further secondary grooves 31 may be interrupted inside a block, dividing it up therefore into portions which are connected together.

The blocks formed in the second shoulder region L3 of the tread band 1 may be interrupted and/or intersected by further secondary grooves 32 which may be disposed in a substantially circumferential and/or oblique direction. These further secondary grooves 32 may completely intersect a block, so as to divide it into several blocks. Alternatively and/or in combination, these further secondary grooves 32 may be interrupted inside a block, dividing it up therefore into portions which are connected together.

Preferably, in patterns of the directional type, such as that shown in Figure 1b, the secondary grooves 30, 31 and/or 32 disposed obliquely with respect to the equatorial plane X-X and on opposite sides of the equatorial plane X-X itself have inclinations which are substantially opposite to each other.

Preferably, the secondary grooves 30, 31 and/or 32 have a width smaller than the width of the circumferential grooves 12, 13. Preferably, the secondary grooves 30, 31 and/or 32 have a width smaller than the width of the transverse grooves 25, 26, 27 and/or 28. In particularly preferred embodiments, the secondary grooves 30, 31 and/or 32 may be formed as thin sipes (with a maximum width smaller than or equal to about 2 mm).

A first plurality of sipes 40 is formed in the blocks in the central region L1 of the tread band 1.

The sipes 40 may have an average inclination which is oblique relative to a circumferential direction.

More particularly, the average inclination of the sipes 40 alternates in the circumferential direction so as to form, along the circumferential direction, at least one sequence of inclined and counter-inclined sipes in the blocks of the central region L1 of the tread band 1.

In preferred embodiments, such as the one shown in Figure 1b, the sipes 40 present in the central region L1 of the tread band are at least partly counter-inclined with respect to the first and/or the second transverse grooves 25, 26 adjacent to the blocks in which these sipes 40 are formed.

The central region L1 of the tread band 1 may also comprise blocks or block portions arranged in side-by-side relationship with each other in the axial/transverse direction, in the case where secondary grooves 30 are present. In this case the sipes 40 may be preferably disposed so that they are counter-inclined with respect to each other in blocks and/or block portions which are disposed substantially in side-by-side relationship in the transverse direction.

A second plurality of sipes 41 may also be formed in the blocks in the first shoulder region L2 of the tread band 1.

A third plurality of sipes 42 may also be formed in the blocks of the second shoulder region L3 of the tread band 1.

Preferably, the sipes 41 present in the first shoulder region L2 and the sipes 42 present in the second shoulder region L3 have average inclinations opposite to each other. As shown in Figure 1, the meeting of the extensions, towards the central region of the tread band, of the average inclinations of the sipes 41 and the sipes 42 thus defines a "pointing arrow", denoted by the reference number 43. In tread patterns of the directional type, this pointing arrow 43 is preferably directed in the opposite direction to the preferential rolling direction F of the tyre. For this purpose, the sipes 41, 42 present in the first and/or in the second shoulder region L2 and L3 of the tread band 1 are preferably counter-inclined with respect to the third and/or the fourth transverse grooves 27, 28 adjacent to the blocks in which the sipes 41, 42 are formed.

In the embodiment shown in Figure 1b the sipes 40, 41, 42 have a substantially rectilinear course.

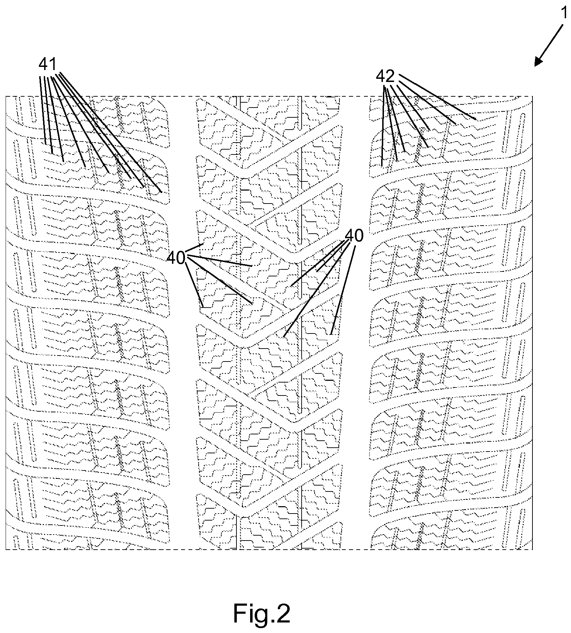

Figure 2 shows instead an embodiment of the tread band 1 similar to that shown in Figure 1b, but with the sipes 40, 41, 42 having a substantially zig-zag course.

More particularly, as shown in Figure 2, the course of the sipes 40 formed in the blocks of the central region L1 of the tread band 1 may preferably comprise a succession of first segments directed substantially in a circumferential direction and second segments directed substantially in the axial direction.

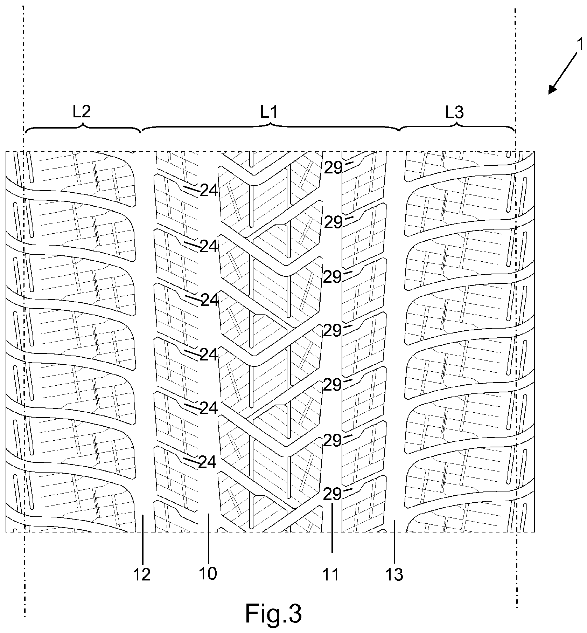

The embodiment shown in Figure 3 is substantially similar to that of Figure 1b, except for the fact that a plurality of rows of blocks separated from each other by circumferential grooves is formed in the central region L1. In particular, in the embodiment shown in Figure 3, in addition to the circumferential grooves 12, 13, two further circumferential grooves 10, 11 define in the central region L1 two further rows of blocks alongside the row of blocks arranged across the equatorial plane of the tyre. The blocks are separated from each other by substantially transverse grooves 24, 29. The blocks of these additional circumferential rows also contain sipes which are inclined in the same direction or counter-inclined with respect to the adjacent transverse grooves 24, 29. In the embodiment shown in Figure 3 the sipes have a substantially rectilinear course, but this must not be understood as being limiting: at least some of the sipes or all the sipes arranged in the blocks of the tread pattern shown in Figure 3 may have a zig-zag course, as described above. The embodiment of Figure 3 may be particularly advantageous for the tread of tyres which have a width with a fairly large nominal cross-section (for example greater than 275).

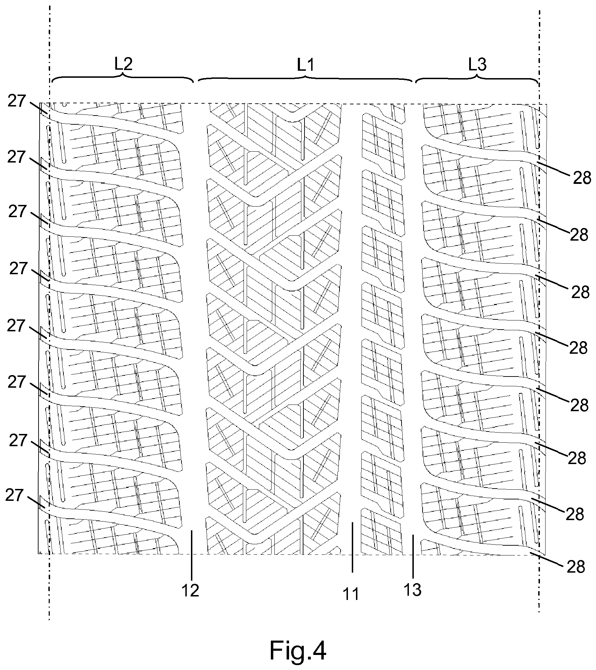

In the embodiment shown in Figure 4, in addition to the circumferential grooves 12, 13, a further circumferential groove 11 defines in the central region L1 a further row of blocks alongside the row of blocks superimposed on the equatorial plane of the tyre. The blocks of this additional circumferential row also contain sipes which are inclined in the same direction or counter-inclined with respect to the adjacent transverse grooves. In the embodiment shown in Figure 4 the sipes have a substantially rectilinear course, but this must not be understood as being limiting: at least some of the sipes or all the sipes arranged in the blocks of the tread pattern shown in Figure 4 may have a zig-zag course, as described above.

In the embodiment shown in Figure 4, the additional row of blocks is arranged to the right of the row of blocks superimposed on the equatorial plane of the tyre. Alternatively, this additional row of blocks could be arranged to the left of the row of blocks superimposed on the equatorial plane of the tyre.

Moreover, in the embodiment shown in Figure 4, the transverse grooves 27, 28 disposed in the shoulder regions L2, L3 have the same inclination. In this way a tread of the asymmetrical type is formed.

It is also possible to vary the inclinations of the transverse grooves which form the blocks of the additional row or rows with respect to that shown in Figures 3 and 4, so as to have at least some of them counter-inclined with respect to the inclination of the transverse rows 25, 26 of the central region L1 and/or the transverse grooves 27, 28 of the shoulder regions L2, L3.

The tread band according to the present invention may be provided on a tyre having any conventional structure, such as those comprising a carcass, a tread band annularly surrounding said carcass, a pair of axially superimposed sidewalls which terminate in beads reinforced with bead cores and corresponding bead fillers, for fixing said tyre to a corresponding mounting rim.

The tyre preferably also comprises a belt structure arranged between the carcass and the tread band. The carcass is reinforced with one or more carcass plies (typically comprising textile reinforcements arranged substantially along radial planes of the tyre) associated with said bead cores, while the belt structure generally comprises two belt layers, normally comprising metal cords arranged parallel to each other in each layer and intersecting those of the adjacent layers, preferably inclined symmetrically with respect to the equatorial plane, and radially superimposed on each other. Preferably, the belt structure also comprises a third belt layer, in a radially external position, provided with rubberized cords, preferably textile cords, oriented circumferentially, namely with an arrangement substantially at zero degrees with respect to said equatorial plane.

### Outdoor tests

The Applicant has carried out a series of test on different travel surfaces using tyres according to the invention and comparison tyres. In particular, tests were carried out on a snow-covered, wet and dry road surface.

In a first series of tests, tyres, size 255/55 R18, model Scorpion™ Ice&Snow (comparison tyre), currently marketed by the Applicant for the SUV sector and popular with clients, were compared with tyres of the same size and with the tread pattern shown in Figure 2 (tyre according to the invention). The remaining characteristics of the compound and structure were the same for both series of tyres.

Table 1 shows the results (expressed as a variation from a reference value conventionally taken to be 100 or as an average rating provided by an expert test driver) obtained with the two tyres in the tests carried out on different surfaces. The improvement obtained with the tyres according to the invention is immediately evident.

**Table 1**

| | Ice&Snow 255/55 R18 (comparison) | Fig.2 255/55 R18 (invention) |
|---|---|---|
| Traction on snow | 100 | 104 |
| Braking on snow | 100 | 111 |
| Braking on dry | 100 | 105 |
| Braking on wet | 100 | 104 |
| Handling on snow | 8 | 8 |
| Handling on dry | 8 | 8 |
| Handling on wet | 8 | 8.2 |
| Aquaplaning along straight sections | 100 | 103 |
| Maximum acceleration around bends | 100 | 104 |
| Maximum speed around bends | 100 | 102 |
| Integral calculated from graph for speed - acceleration around bends | 100 | 109 |

In a second series of tests, tyres, size 275/45 R20, model Scorpion™ Ice&Snow (comparison tyre), also marketed by the Applicant for the SUV sector, were compared with tyres of the same size and with the tread pattern shown in Figure 1b (tyre according to the invention). The remaining characteristics of the compound and structure were the same for both series of tyres.

Table 2 shows the results (expressed as a variation from a reference value conventionally taken to be 100 or as an average rating provided by an expert test driver) obtained with the two tyres in the tests carried out on different surfaces. In this case also the improvement obtained with the tyres according to the invention is immediately evident.

**Table 2**

| | Ice&Snow 275/45 R20 (comparison) | Fig.1b 275/45 R20 (invention) |
|---|---|---|
| Traction on snow | 100 | 107 |
| Braking on snow | 100 | 104 |
| Handling on snow | 7.3 | 8 |
| Handling on dry | 7.5 | 8 |
| Aquaplaning along straight sections | 100 | 101 |
| Noisiness | 7 | 7.8 |
| Comfort | 7.3 | 7.4 |

In a third series of tests, tyres, size 295/35 R21, model Scorpion™ Ice&Snow (comparison tyre), also marketed by the Applicant for the SUV sector, were compared with tyres of the same size and with the tread pattern shown in Figure 3 (tyre according to the invention). The remaining characteristics of the compound and structure were the same for both series of tyres.

Table 3 shows the results (expressed as a variation from a reference value conventionally taken to be 100 or as an average rating provided by an expert test driver) obtained with the two tyres in the tests carried out on a snow-covered surface. In this case also the improvement obtained with the tyres according to the invention is immediately evident.

**Table 3**

| | Ice&Snow 295/35 R21 (comparison) | Fig.3 295/35 R21 (invention) |
|---|---|---|
| Traction on snow | 100 | 103 |
| Braking on snow | 100 | 103 |
| Handling on snow | 7 | 8 |

In a fourth series of tests, tyres, size 225/50 R17, model Sottozero™ II (comparison tyre), marketed by the Applicant for the berline sector and popular with clients, were compared with tyres of the same size and with the tread pattern shown in Figure 2 (tyre according to the invention). The remaining characteristics of the compound and structure were the same for both series of tyres.

Table 4 shows the results (expressed as a variation from a reference value conventionally taken to be 100) obtained with the two tyres in the tests carried out on a snow-covered surface. In this case also the improvement obtained with the tyres according to the invention is immediately evident.

**Table 4**

| | Sottozero II 225/50 R17 (tyre) | Fig.2 225/50 R17 (invention) |
|---|---|---|
| Traction on snow | 100 | 108 |
| Braking on snow | 100 | 101 |

## Claims

1. Tyre for wheels of vehicles having a tread band (1) in which a tread pattern is defined which comprises:
a) two substantially circumferential grooves (12, 13) having width of at least 8 mm, which define on said tread band a first (L2) and a second shoulder region (L3) and a central region (L1) extending across an equatorial plane of said tyre, wherein said central region has a width equal to at least 30% of an effective width of said tread band;
b) a plurality of transverse grooves (25, 26, 27, 28) which define, together with said substantially circumferential grooves (12, 13), a plurality of blocks in said central region (L1), said first shoulder region (L2) and said second shoulder region (L3) wherein said plurality of transverse grooves comprises a plurality of first transverse grooves (25) extending over the entire width of said central region (L1) and a plurality of second transverse grooves (26) arranged between said first transverse grooves (25); wherein at least some of the first transverse grooves (25) in said central region have a substantially U-shaped, or V-shaped, configuration.
c) a first plurality of sipes (40) formed in said blocks of said central region (L1);wherein the sipes of said first plurality of sipes have an oblique average inclination relative to a circumferential direction, said average inclination being alternated in the circumferential direction so as to form at least one sequence of inclined and counter-inclined sipes in at least some circumferentially adjacent blocks of said central region (L1); and wherein said transverse grooves (25, 26) define, in said central region, at least one module of blocks (M1, M2) which is substantially repeated in succession along the circumferential direction, said at least one module comprising at least two circumferentially adjacent blocks
and wherein a succession of a first module (M1) and a second module (M2) substantially identical to the first module and overturned by 180° is repeated substantially along the circumferential direction.

2. Tyre according to Claim 1, wherein said tyre has a section width of at least 220 mm.

3. Tyre according to Claim 1 or 2, wherein the width of said substantially circumferential grooves (12, 13) is equal to at least 10 mm.

4. Tyre according to any one of the preceding claims, wherein said transverse grooves (25, 26, 27, 28) have an oblique inclination relative to a circumferential direction in said central region (L1) of said tread band (1).

5. Tyre according to Claim 4, wherein at least some transverse grooves (25, 26) of said central region (L1) of said tread band (1) are counter-inclined relative to the sipes (40) of said first plurality of sipes formed in blocks of said central region (L1), adjacent to said at least some transverse grooves (25, 26).

6. Tyre according to any one of the preceding claims, wherein said tread pattern defines a preferential rolling direction (F) for said tyre.

7. Tyre according to any one of the preceding claims, wherein said tread pattern comprises a second plurality of sipes (41) formed in said first shoulder region (L2) and a third plurality of sipes (42) formed in said second shoulder region (L3).

8. Tyre according to Claims 6 and 7, wherein the sipes (41) of said second plurality of sipes and the sipes (42) of said third plurality of sipes have average inclinations opposite to each other, and wherein the meeting of the extensions towards said central region (L1) of said average inclinations defines a pointing arrow (43) directed in the opposite direction to said preferential rolling direction (F) of said tyre.

9. Tyre according to Claim 1 and/or Claim 7, wherein the sipes of said first plurality of sipes (40) and/or said second plurality of sipes (41) and/or said third plurality of sipes have a zig-zag course (42).

10. Tyre according to Claim 9, wherein the course of the sipes of said first plurality of sipes (40) comprises a succession of first segments directed substantially in a circumferential direction and second segments directed substantially in an axial direction.

11. Tyre according to any one of the preceding claims, wherein said central region (L1) comprises blocks or block portions disposed substantially in side-by-side relationship in the transverse direction, and wherein the sipes of said first plurality of sipes (40) formed in at least some of said blocks and/or block portions disposed substantially in side-by-side relationship in the transverse direction are counter-inclined with respect to each other.

12. Tyre according to any one of the preceding claims, wherein said transverse grooves (27, 28) have, in said first and said second shoulder region (L2, L3), a greater inclination, in absolute value, than the inclination of said transverse grooves in said central region (L1).

## Patentansprüche

1. Reifen für Fahrzeugräder, mit einem Laufflächenring (1), in welchem ein Laufflächenprofil definiert ist, das umfasst:
a) zwei im Wesentlichen umlaufenden Nuten (12, 13) mit einer Breite von zumindest 8 mm, die auf dem Laufflächenring einen ersten (L2) und einen zweiten Schulterbereich (L3) und einen Zentralbereich (L1), der sich über eine Äquatorialebene des Reifens erstreckt, definieren, wobei der Zentralbereich eine Breite gleich zumindest 30% einer effektiven Breite des Laufflächenrings aufweist;
b) eine Vielzahl von querverlaufenden Nuten (25, 26, 27, 28), die zusammen mit den im Wesentlichen umlaufenden Nuten (12, 13) eine Vielzahl von Blöcken in dem Zentralbereich (L1), dem ersten Schulterbereich (L2) und dem zweiten Schulterbereich (L3) definieren, wobei die Vielzahl von querverlaufenden Nuten eine Vielzahl von ersten querverlaufenden Nuten (25), die sich über die gesamte Breite des Zentralbereichs (L1) erstrecken, und eine Vielzahl von zweiten querverlaufenden Nuten (26) umfasst, die zwischen den ersten querverlaufenden Nuten (25) angeordnet sind; wobei zumindest einige der ersten querverlaufenden Nuten (25) in dem Zentralbereich eine im Wesentlichen U-förmige, oder V-förmige Konfiguration aufweisen,
c) eine erste Vielzahl von Lamellen (40), die in den Blöcken des Zentralbereichs (L1) angeordnet sind; wobei die Lamellen der ersten Vielzahl von Lamellen eine schräge mittlere Neigung relativ zu einer Umfangsrichtung aufweisen, wobei die mittlere Neigung in der Umfangsrichtung alterniert, um zumindest eine Abfolge von geneigten und gegensätzlich geneigten Lamellen in zumindest einigen in Umfangsrichtung benachbarten Blöcken des Zentralbereichs (L1) zu bilden; und wobei die querverlaufenden Nuten (25, 26) in dem Zentralbereich zumindest ein Modul von Blöcken (M1, M2) definieren, das im Wesentlichen der Reihe nach entlang der Umfangsrichtung wiederholt wird, wobei das zumindest eine Modul zumindest zwei in Umfangsrichtung benachbarte Blöcke umfasst, und wobei eine Abfolge eines ersten Moduls (M1) und eines zweiten Moduls (M2), das im Wesentlichen identisch mit dem ersten Modul, aber um 180° gedreht ist, im Wesentlichen entlang der Umfangsrichtung wiederholt wird.

2. Reifen nach Anspruch 1, wobei der Reifen eine Querschnittsbreite von zumindest 220 mm aufweist.

3. Reifen nach Anspruch 1 oder 2, wobei die Breite der im Wesentlichen umlaufenden Nuten (12, 13) gleich zumindest 10 mm ist.

4. Reifen nach einem der vorhergehenden Ansprüche, wobei die querverlaufenden Nuten (25, 26, 27, 28) eine schräge Neigung relativ zu einer Umfangsrichtung in dem Zentralbereich (L1) des Laufflächenrings (1) aufweisen.

5. Reifen nach Anspruch 4, wobei zumindest einige querverlaufende Nuten (25, 26) des Zentralbereichs (L1) des Laufflächenrings (1) relativ zu den Lamellen (40) der ersten Vielzahl von Lamellen, die in Blöcken des Zentralbereichs (L1), benachbart zu den zumindest einigen querverlaufenden Nuten (25, 26), ausgebildet sind, entgegengesetzt schräg sind.

6. Reifen nach einem der vorhergehenden Ansprüche, wobei das Laufflächenprofil eine bevorzugte Rollrichtung (F) für den Reifen definiert.

7. Reifen nach einem der vorhergehenden Ansprüche, wobei das Laufflächenprofil eine zweite Vielzahl von Lamellen (41) umfasst, die in dem ersten Schulterbereich (L2) ausgebildet sind, und eine dritte Vielzahl von Lamellen (42), die in dem zweiten Schulterbereich (L3) ausgebildet sind.

8. Reifen nach den Ansprüchen 6 und 7, wobei die Lamellen (41) der zweiten Vielzahl von Lamellen und die Lamellen (42) der dritten Vielzahl von Lamellen mittlere Neigungen haben, die einander entgegengesetzt sind, und wobei der Treffpunkt der Verläufe der mittleren Neigungen zu dem Zentralbereich (L1) hin einen spitzen Pfeil (43) bildet, der in die der bevorzugten Rollrichtung (F) des Reifens entgegengesetzte Richtung weist.

9. Reifen nach Anspruch 1 und/oder Anspruch 7, wobei die Lamellen der ersten Vielzahl von Lamellen (40) und/oder der zweiten Vielzahl von Lamellen (41) und/oder der dritten Vielzahl von Lamellen einen Zickzack-Verlauf (42) aufweisen.

10. Reifen nach Anspruch 9, wobei der Verlauf der Lamellen der ersten Vielzahl von Lamellen (40) eine Abfolge von ersten Segmenten umfasst, die im Wesentlichen in eine Umfangsrichtung gerichtet sind, und zweite Segmente, die im Wesentlichen in eine axiale Richtung gerichtet sind.

11. Reifen nach einem der vorhergehenden Ansprüche, wobei der Zentralbereich (L1) Blöcke oder Blockabschnitte umfasst, die im Wesentlichen in einer Beziehung Seite an Seite in der Querrichtung angeordnet sind, und wobei die Lamellen der ersten Vielzahl von Lamellen (40), die in zumindest einigen der Blöcke und/oder Blockabschnitte ausgebildet sind, die im Wesentlichen in einer Beziehung Seite an Seite in der Querrichtung angeordnet sind, in Bezug aufeinander entgegengesetzt schräg sind.

12. Reifen nach einem der vorhergehenden Ansprüche, wobei die querverlaufenden Nuten (27, 28) in dem ersten und zweiten Schulterbereich (L2, L3) eine stärkere Neigung in absoluten Werten aufweisen als die Neigung der querverlaufenden Nuten in dem Zentralbereich (L1).

## Revendications

1. Pneu pour roues de véhicules ayant une bande de roulement (1) dans laquelle une sculpture de bande de roulement est définie qui comprend :
a) deux rainures sensiblement circonférentielles (12, 13) ayant une largeur d'au moins 8 mm, qui définissent sur ladite bande de roulement des première (L2) et deuxième (L3) régions d'épaulement et une région centrale (L1) s'étendant à travers un plan équatorial dudit pneu, où ladite région centrale a une largeur égale à au moins 30% d'une largeur effective de ladite bande de roulement ;
b) une pluralité de rainures transversales (25, 26, 27, 28) qui définissent, ensemble avec lesdites rainures sensiblement circonférentielles (12, 13), une pluralité de blocs dans ladite région centrale (L1), ladite première région d'épaulement (L2) et ladite deuxième région d'épaulement (L3), où ladite pluralité de rainures transversales comprend une pluralité de premières rainures transversales (25) s'étendant sur toute la largeur de ladite région centrale (L1) et une pluralité de deuxièmes rainures transversales (26) agencées entre lesdites premières rainures transversales (25) ;
dans lequel au moins certaines des premières rainures transversales (25) dans ladite région centrale ont une configuration sensiblement en forme de U ou en forme de V.
c) une première pluralité de lamelles (40) formées dans lesdits blocs de ladite région centrale (L1) ;
dans lequel les lamelles de ladite première pluralité de lamelles ont une inclinaison moyenne oblique par rapport à une direction circonférentielle, ladite inclinaison moyenne étant alternée dans la direction circonférentielle de manière à former au moins une séquence de lamelles inclinées et contre-inclinées dans au moins certains blocs adjacents de ladite région centrale (L1) ; et où lesdites rainures transversales (25, 26) définissent, dans ladite région centrale, au moins un module de blocs (M1, M2) qui est sensiblement répété successivement le long de la direction circonférentielle, ledit au moins un module comprenant au moins deux blocs adjacents de manière circonférentielle,
et dans lequel une succession d'un premier module (M1) et d'un deuxième module (M2) sensiblement identique au premier module et renversé de 180° est répétée sensiblement le long de la direction circonférentielle.

2. Pneu selon la revendication 1, dans lequel ledit pneu a une largeur de section d'au moins 220 mm.

3. Pneu selon la revendication 1 ou 2, dans lequel la largeur desdites rainures sensiblement circonférentielles (12, 13) est au moins égale à 10 mm.

4. Pneu selon l'une quelconque des revendications précédentes, dans lequel lesdites rainures transversales (25, 26, 27, 28) ont une inclinaison oblique par rapport à une direction circonférentielle dans ladite région centrale (L1) de ladite bande de roulement (1).

5. Pneu selon la revendication 4, dans lequel au moins certaines rainures transversales (25, 26) de ladite région centrale (L1) de ladite bande de roulement (1) sont contre-inclinées par rapport aux lamelles (40) de ladite première pluralité de lamelles formées dans des blocs de ladite région centrale (L1), adjacents auxdites au moins certaines rainures transversales (25, 26).

6. Pneu selon l'une quelconque des revendications précédentes, dans lequel ladite sculpture de bande de roulement définit une direction de roulement préférentielle (F) pour ledit pneu.

7. Pneu selon l'une quelconque des revendications précédentes, dans lequel ladite sculpture de bande de roulement comprend une deuxième pluralité de lamelles (41) formées dans ladite première région d'épaulement (L2) et une troisième pluralité de lamelles (42) formées dans ladite deuxième région d'épaulement (L3).

8. Pneu selon les revendications 6 et 7, dans lequel les lamelles (41) de ladite deuxième pluralité de lamelles et les lamelles (42) de ladite troisième pluralité de lamelles ont des inclinaisons moyennes opposées les unes aux autres, et dans lequel la réunion des extensions vers ladite région centrale (L1) desdites inclinaisons moyennes définit une flèche pointée (43) dirigée dans la direction opposée à ladite direction préférentielle de roulement (F) dudit pneu.

9. Pneu selon la revendication 1 et/ou 7, dans lequel les lamelles de ladite première pluralité de lamelles (40) et/ou de ladite deuxième pluralité de lamelles (41) et/ou de ladite troisième pluralité de lamelles ont un trajet en zigzag (42).

10. Pneu selon la revendication 9, dans lequel le trajet des lamelles de ladite première pluralité de lamelles (40) comprend une succession de premiers segments dirigés sensiblement dans une direction circonférentielle et de deuxièmes segments dirigés sensiblement dans une direction axiale.

11. Pneu selon l'une quelconque des revendications précédentes, dans lequel ladite région centrale (L1) comprend des blocs ou des parties de blocs disposé(e)s sensiblement côte à côte dans la direction transversale, et dans lequel les lamelles de ladite première pluralité de lamelles (40) formées dans au moins certain (e) s desdit (e) s blocs et/ou parties de bloc disposé(e)s sensiblement côte à côte dans la direction transversale sont contre-inclinées les unes par rapport aux autres.

12. Pneu selon l'une quelconque des revendications précédentes, dans lequel lesdites rainures transversales (27, 28) ont, dans lesdites première et deuxième régions d'épaulement (L2, L3), une inclinaison plus importante, en valeur absolue, que l'inclinaison desdites rainures transversales dans ladite région centrale (L1).
